Europäisches Patentamt

European Patent Office

Office européen des brevets

(11) Publication number: **0 438 667 A2**

# EUROPEAN PATENT APPLICATION

(21) Application number: 90122517.7

(51) Int. Cl.⁵: **B07C 5/36**

(22) Date of filing: 26.11.90

(30) Priority: 01.12.89 IT 2256489

(43) Date of publication of application:
31.07.91 Bulletin 91/31

(84) Designated Contracting States:
**DE DK ES FR GB**

(71) Applicant: **ALCATEL FACE STANDARD S.p.A.**
**Viale L. Bodio 33/39**
**I-20158 Milano(IT)**

(72) Inventor: **Scata, Mario**
**Via Fonte Baiano 74**
**I-64020 Teramo(IT)**

(74) Representative: **Weinmiller, Jürgen et al**
**Lennéstrasse 9 Postfach 24**
**W-8133 Feldafing(DE)**

(54) **Modular sorting unit for belt conveyor installations and the like.**

(57) The sorting unit herein described comprises a plurality of conveyor rollers paralleled up and rotatably operated simultaneously to convey goods from a conveyor belt to a primary collecting conveyor belt longitudinally aligned with the conveyor belt itself. There is also a plurality of dragging chains engaged by respective sprockets and interstitially of the conveyor rollers, slightly below a sliding surface defined superiorly by the rollers. Along each chain is a plurality of thrust elements effective to act on the goods to divert them upon actuation of the chains, a side collecting belt extending perpendicularly to the conveyor and primary collecting belts. A stop partition vertically movable interrupts the motion of the goods caused by the conveyor rollers during the actuation of the chains.

FIG. 1

# "MODULAR SORTING UNIT FOR BELT CONVEYOR INSTALLATIONS AND THE LIKE"

The present invention relates to a modular sorting unit far belt conveyor installations and the like, of the type comprising: a supporting structure disposed among a conveyor device which conveys goods on said modular sorting unit, a primary collecting device longitudinally aligned with the conveyor device and at least a side collecting device extending in a direction substantially perpendicular to said conveyor and primary collecting devices: a plurality of conveyor rollers operatively mounted on the supporting structure, paralleled up to define a sliding surface substantially horizontal and rotatably operated for moving the goods from the conveyor device toward the primary collecting device; a plurality of flexible transmission members interstitially of the conveyor rollers and operatively mounted between transmission pulleys rotatably operated for diverting, by means of the flexible transmission members themselves, the goods toward said at least one side collecting device.

As known, belt conveyor installations, e.g. those located at post - office premises for sorting parcels or in stores for selecting and/or sorting different articles, often employ modular sorting units capable to grip single articles from a conveyor belt device and to selectively distribute them to one or more collecting belts according to controls by an operator or by electronic means of different kind.

A known sorting unit comprises essentially a plurality of spaced dragging belts engaged by respective pulleys operatively mounted on a mounting structure. The belts are paralleled up to define in a superior plane a sliding surface whereon, through the motion of the belts obtained by rotatably operating the above mentioned pulleys, the goods from conveyor belt are moved toward the primary collecting belt. The sorting unit uses also a plurality of conveyor rollers which fit between the spaced belts and run parallel to them.

The conveyor rollers are mounted on a support frame selectively movable up and down so as that the rollers can be raised from a rest condition where they lie below said sliding surface, defined by the belts, to an operative condition where they slightly project over the belts in order to hold the article lifted from the belts.

When goods from the conveyor belt are to be allowed to continue in the main direction toward the primary collecting belt, the rollers are held in the rest condition so that the belts can carry out their dragging function. When conveyed goods are to be diverted from the main direction to a side conveyor belt, the carrying rollers are rotated and moved up to the operative condition where they rise above the belts, grip the goods and divert them to the side collecting belt. The rollers also are able to reverse their direction in order to convey selectively the goods on two side collecting belts arranged at respectively opposite sides.

Another type of known modular sorting unit conceptually similar to the above one is structured in such a way that the rollers convey the goods in the main direction toward the primary collecting belt, while the belts can be moved selectively down to allow the goods to continue in the main direction and up to divert them to the side collecting belts.

Both said types of sorting units have some drawbacks caused essentially by the absence of means which are able to control the correct orientation of goods on the same unit during the transfer steps.

One of these drawbacks consists in that the goods, particularly if of very low weight and/or coated with protective material of low coefficient of friction, tend to skid undesirably in a rather unforeseeable manner on the conveyor rollers, when these are moved up in the operative condition. Because of these skids the diverted goods assume an anomalous orientation on the sorting unit, which will persist even after the diverting of the goods on the respective side collecting belt.

The anomalous orientation of the goods may prejudice the correct travel along the various carrying belts and, above all, causes serious problems when the goods are provided with bar codes to be read out by appropriate equipments installed along the sorting installation. It is in fact known that the correct reading of bar codes by the mentioned equipments is possible only if the bar code, and hence the article whereon it is applied, has a well defined orientation.

Moreover, the skid of the articles on the conveyor rollers may easily alterate the mutual distances between the various articles distributed along the sorting installation. Also this event may cause serious complications during the operation of the installation in general.

Finally it has to be noted that the necessity of moving up and down either the conveyor rollers or the dragging belts from the rest position to the operative one, involves considerable structural complications of the sorting unit thus causing a remarkable increase in manufacturing and maintenance costs of the unit itself.

The main object of the present invention is substantially that of solving the above mentioned problems of the prior art devices by providing a new and improved modular sorting unit of simplified construction as compared with the known sorting units which allows to maintain the correct orientation of the goods diverted on the collecting belts.

This and other objects which will be clearer hereinafter are substantially achieved by a modular sorting unit for belt conveyor installations of the type mentioned at the outset, characterized in that it comprises, for each of said flexible transmission members, at least a thrust element arranged to protrude above said sliding surface in order to engage with the goods to be diverted, upon the operation of the respective flexible transmission member; stop means to halt the motion of the goods conveyed by the conveyor rollers during the actuation of the flexible transmission members.

Other features and advantages will clearly appear from the detailed description of a preferred but not exclusive embodiment of a modular sorting unit for belt conveyor installations, according to the present invention, taken hereinafter in coujunction with the attached drawings, given as an indicative and therefore not limitative example, where:
- figure 1 is a perspective view with portions broken away of a modular sorting unit according to the present invention, disposed among respective conveyor and collecting belts;
- figure 2 shows, in a perspective view one of the thrust elements associated with the dragging chains provided with the modular sorting unit of this invention;
- figure 3 shows,indicatively and in a perspective view, a belt conveyor installation where a plurality of modular sorting units are installed according to the present invention. Referring now to said figures, reference numeral 1 indicates as a whole a modular sorting unit for belt conveyor installations and the like according to the present invention.

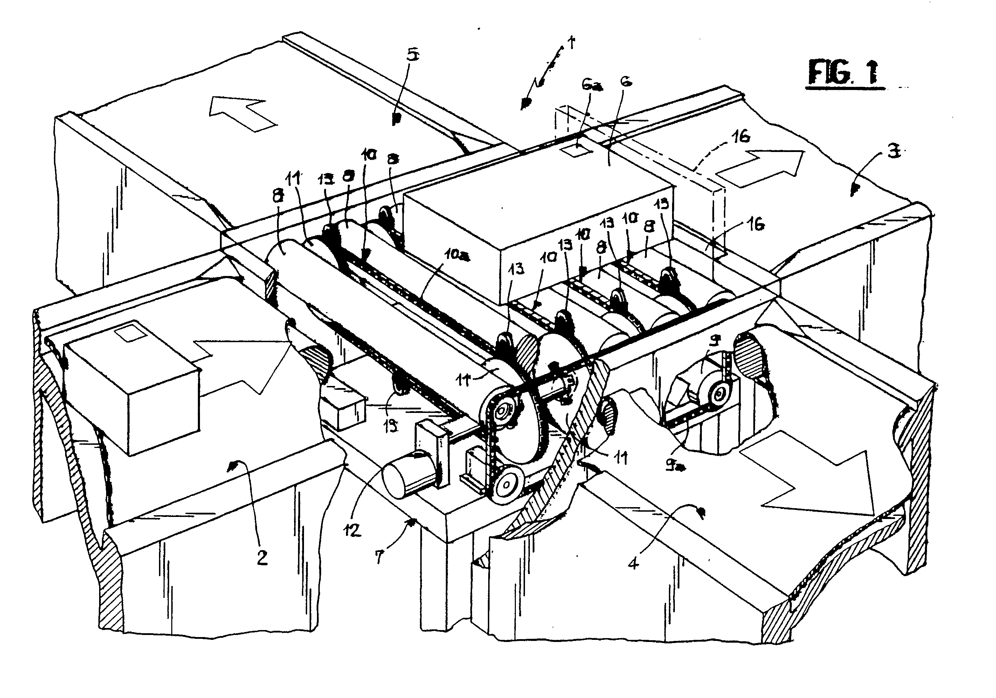

The modular sorting unit 1 operates among a conveyor device 2, a primary collecting device 3 longitudinally aligned with the conveyor device 2 and one or more side collecting devices 4,5 extending in a direction substantially perpendicular to conveyor device 2 and primary collecting device 3. In the embodiment of figure 1, both the conveyor 2 and collecting devices 3,4,5, consist of conventional conveyor belts.

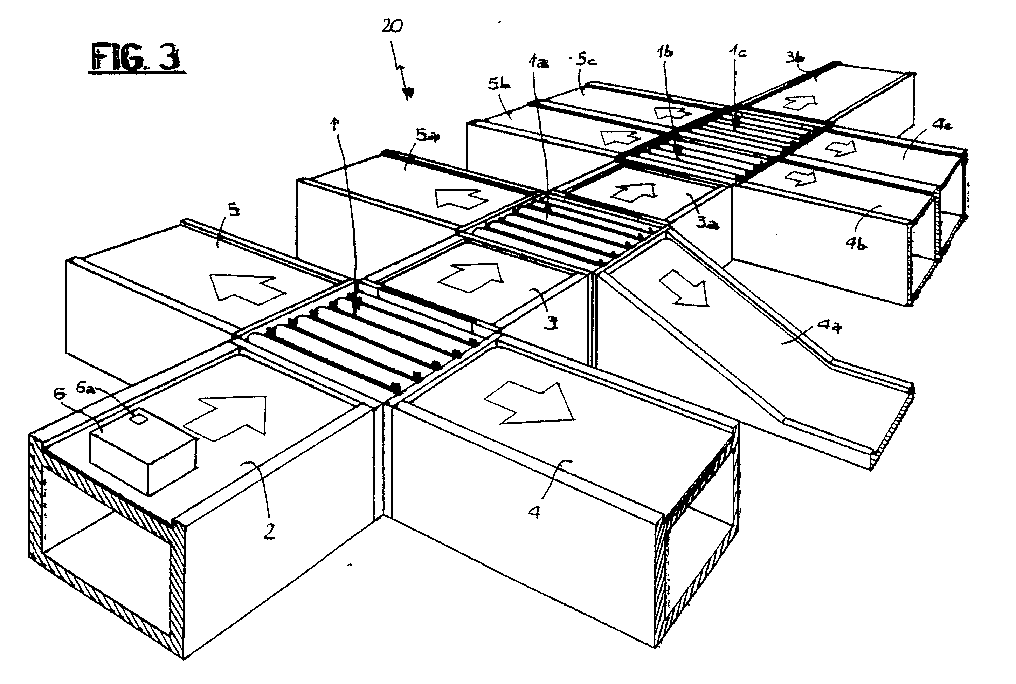

In figure 3, where a plurality of modular sorting units 1,1a,1b,1c, associated to a conveyor system are designed as a whole by reference numeral 20, the conveyor belt indicated by 3 carries out simultaneously the function of primary collecting device for the first modular sorting unit 1 and of conveyor for a second modular sorting unit indicated by 1a Two side collecting devices 4a,5a are associated with the second modular sorting unit 1a and consist respectively of a collecting chute 4a and another conveyor belt 5a. Another conveyor belt 3a ends up at the second sorting unit 1a and acts as primary collecting device for the second unit 1a and as conveyor device for a third unit 1b, which two side collecting belts 4b,5b are associated with.

The primary collecting device of the third modular unit 1b consists of a fourth sorting unit 1c, which respective side collecting devices 4c,5c are associated with, and at which a final primary collecting device 3b ends up.

Referring again to figure 1, the modular sorting unit 1 comprises conventionally a supporting structure 7 arranged among conveyor device 2, primary collecting device 3 and side collecting devices 4,5. A plurality of conveyor rollers 8 are operatively mounted on supporting structure 7 and paralleled up as to define a sliding surface substantially horizontal and flush with the belts forming respectively the conveyor (2) and the collecting (3) devices.

The conveyor rollers 8 have their axis perpendicular to the feed (main)direction of the goods 6 on the conveyor device 2 and are rotatably operated by an electric motor 9 acting on a primary driving chain 9a to carry the goods 6 from the conveyor device 2 toward primary collecting device 3.

A plurality of flexible driving members 10, preferably consisting of driving chains, which fit between the spaced rollers (8) and run parallel to them, are provided. Each chain 1 is operatively engaged by two sprockets 11 rotatably mounted on the supporting structure 7 and rotatably operated upon command by motor reducer 12

Originally each chain 10 extends, with its upper section 10a, minimally below the sliding surface as defined above by conveyor rollers 8, and is provided with one or more thrust elememts 13 arranged to protrude above said sliding surface, In the described embodiment three thrust elements 13 are associated to each chain 10 and mutually spaced at a prefixed distance coinciding substantially with the center distance between the sprockets 11.

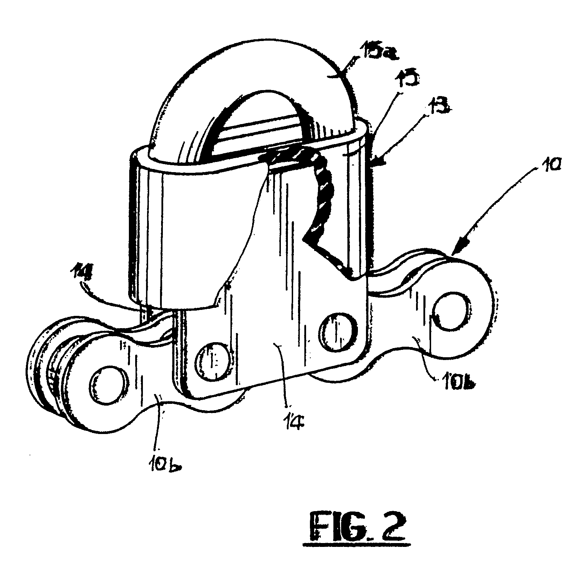

Referring in particular to figure 2, according a preferred embodiment, each thrust element 13 comprises a pair of bearing plates 14 pivoted at opposite sides to two links 10b forming the corresponding dragging chain 10. On the bearing plates 14 rising parallelly from the links 10b is fitted a protective element of elastomeric material provided with a arched end portion 15a.

The subject modular sorting unit comprises also stop means 16 effective to operate during the actuation of the flexible transmission members 10 in order to stop the motion of goods 6 caused by rollers 8.

In the illustrated embodiment these stop means comprise essentially a stop partition 16 slidably engaged to the support 7, near to one side of the modular sorting unit 1 adjacent to primary collecting device 3. The stop partition 16 is vertically movable, for instance upon the action of a fluid - dynamic cylinder not illustrated since known per se, from a rest position where it is positioned below the sliding surface defined superiorly by conveyor rollers 8, up to an operative one where it protrudes above the sliding surface itself, so as to provide a surface plate for the goods 6 conveyed by rollers 8.

Advantageously, the stop partition 16 extends according a plane parallel to the axis of the conveyor rollers 8 so that the goods 6 assume a pre - established orientation, as will clearly appear in the following.

After a description in structural terms, the operation of the modular sorting unit according to the invention is the following.

In any way known per se, the goods carried by the conveyor 2 have been subjected to an identification and/or classification phase, e.g. by reading out of a bar code 6a applied thereon, according to which each article is to be selectively conveyed on a primary collecting device 3 or on one of side collecting devices 4,5.

The operation of the whole sorting unit 1 is governed by an electronic control unit, not illustrated being known per se and of conventional type, which will establish the sorting of goods 6 on the primary collecting device 3 or on one of side collecting devices 4,5, according to information obtained from the reading out of bar code 6a.

When the goods 6 conveyed on the unit 1 are to be transferred to primary collecting device 3, the dragging chains 1 are maintained in the rest condition with two thrust elements 13 arranged at the opposite sides of the unit itself, and the conveyor rollers are maintained in rotation by motor 9 so that the goods are allowed to continue in the main direction toward the primary collecting device.

On the contrary, when goods 6 are to be selectively conveyed in the left and right directions toward side collecting devices 4,5, the stop partition 16 is raised to the operative position so that the goods conveyed by rotating rollers 8 abut against the partition, in order to assume and/or maintain a prefixed orientation. At this point the motor reducer 12, which simultaneously operates the dragging chains 10 moving the upper sections 10a thereof selectively in either the left or the right direction according to which of the side collecting devices 4,5, goods 6 are to be discharged. Upon the actuation of chains 10, the thrust elements 13 mounted thereon abut on one side of goods and push them on the corresponding side collecting device 4,5. The motor 12, operated by control means not illustrated since known per se, is disabled when the dragging chains 10 are shifted of a length equal to the mutual distance between two consecutive thrust elements 13 distributed along the chain.

In this way, the chains will stop with two thrust elements positioned at the opposite sides of the sorting unit 1 and therefore set to perform the eventual diverting of the subsequent conveyed object toward one of the side collecting devices 4,5.

The present invention thus achieves the proposed objects.

It is evidenced that the modular sorting unit according to the present invention is able to keep and/or to provide a desired orientation to the diverted goods. To this end it has to be pointed out that the orientation of goods obtained in the described embodiment with the assistance of stop partition 16, may be carried out directly upon the action of thrust elements 13, being these last aligned according to a prefixed orientation. By omitting the partition 16, the stop of the goods for side diverting by the chains 10 may be realized for instance by interrupting the actuation of conveyor rollers 8 upon command of motor 9.

It has to be noted that the stop partition 16 may be used not only for arresting the forward motion of the goods giving thereto the desired orientation during the diverting step toward side collecting devices, but it can also be raised in order to restore the desired orientation of goods to be conveyed on primary collecting device 3. It is also pointed out that chains 10 provided with respective thrust elements 13 are effective to divert goods toward side collecting devices without the need of moving up and down the chains and/or the conveyor rollers, as in the prior art modular sorting units. This obviously allows to considerably simplify the structure of the modular sorting unit as compared with conventional solutions.

Naturally various modifications and changes may be made to the described embodiment without departing in any way from the spirit which characterizes the present invention.

**Claims**

1. A modular sorting unit for belt conveyor installations and the like comprising:
   - a supporting structure disposed among a conveyor conveying the goods on said sorting unit, a primary collecting device longitudinally aligned with the conveyor and at least one side collecting device extending in a direction substantially perpendicular to said conveyor and primary collecting devices;
   - a plurality of conveyor rollers operatively mounted on the supporting structure up to define a sliding surface substantially horizontal and rotatably operated in order to convey the goods from the conveyor toward the primary collecting device;

- a plurality of flexible transmission members interstitially of the conveyor rollers and each operatively engaged by respective sprockets rotatably operated to divert, through the flexible transmission members themselves, the goods toward said side collecting device, characterized in that for each flexible transmission member, it comprises:

- at least one thrust element, arranged to protrude above said sliding surface in order to engage with the goods to be diverted upon operation of the respective flexible transmission member;

- stop means to halt the motion of the goods conveyed by the conveyor rollers during the actuation of flexible transmission member.

2. A modular sorting unit according to claim 1, characterized in that each flexible transmission member is provided with a plurality of thrust elements mutually spaced by a distance substantially equal to the centre distance between the sprockets whereon the transmission member is wrapped up.

3. A sorting unit according to claim 1, characterized in that said stop means comprise at least a stop partition slidably engaged to the supporting structure near to an edge of the modular sorting unit adjacent to said primary collecting device, said stop partition moving vertically from a rest condition where it is located below the sliding surface defined superiorly by the conveyor rollers, up to an operative condition where it protrudes above said sliding surface so as to provide a surface plate for the goods conveyed by said conveyor rollers.

4. A sorting unit according to claim 1, characterized in that each thrust element comprises two bearing plates parallelly opposed and fixed to the opposite sides of the corresponding flexible transmission member, a protective element of elastomeric material being fitted on said plates.

5. A sorting unit for belt conveyor systems according to the preceding claims and what herein described and illustrated for the proposed objects.

FIG. 1

FIG. 2

FIG. 3